(19)

Europäisches Patentamt
European Patent Office
Office européen des brevets

(11) **EP 2 432 172 A1**

(12) **EUROPEAN PATENT APPLICATION**

(43) Date of publication:
**21.03.2012 Bulletin 2012/12**

(51) Int Cl.:
*H04L 12/56* (2006.01)     *H04W 72/12* (2009.01)

(21) Application number: **10306002.6**

(22) Date of filing: **20.09.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(71) Applicant: **Thomson Licensing**
**92130 Issy-les-Moulineaux (FR)**

(72) Inventors:
• **Salonidis, Theodoros**
**92130, Issy les Moulineaux (FR)**

• **Laufer, Rafael**
**92130, Issy les Moulineaux (FR)**
• **Lundgren, Henrik**
**92130, Issy les Moulineaux (FR)**

(74) Representative: **Ruellan-Lemonnier, Brigitte et al**
**Technicolor**
**European Patent Operations**
**1-5 Rue Jeanne d'Arc**
**92443 Issy-les-Moulineaux Cedex (FR)**

(54) **Device and method for computing a future schedule of elements from a current schedule and predictions of a network state**

(57)     A device (D) is intended for computing a future schedule S(k+1) of elements (N1-N4) from a current schedule S(k) of these elements (N1-N4), each schedule S(k) being defined by N sub-schedules $S_n(k)$ (with $N \geq 2$ and n = 1 to N) intended to be successively used by the elements (N1-N4) at N successive sub-parts of a periodic entity F(k) and inducing N successive updating of at least one network state Q(k) of the elements (N1-N4). This device (D) is arranged for computing at least N-1 predictions $Q_n(k+1)$ of the network state Q(k) for N-1 sub-parts of a next periodic entity F(k+1), and N future sub-schedules $S_n(k+1)$, defining a future schedule S(k+1), for the N sub-parts of the next periodic entity F(k+1), from the network state Q(k) and these N-1 predictions $Q_n(k+1)$, each prediction $Q_n(k+1)$ being computed by emulating use by the elements (N1-N4) of at least one sub-schedule $S_n(k)$ and at least one future sub-schedule $S_n(k+1)$.

FIG.1

EP 2 432 172 A1

**Description**

Technical field

The present invention relates to the computing of future schedules of elements of a system, such as communication nodes of a network, for instance.

Background of the invention

In some technical domains, elements of a system need schedules in order to work together. This notably the case, although not exclusively, of (communication) nodes that belong to a (communication) network using a slotted access MAC protocol, such as Time Division Multiple Access (TDMA), for instance. This is also the case, although not exclusively, of input ports and/or outputs ports of (high-speed) switches that are used in wired backbonesz for switching packets.

In the case of a network a scheduler or controller is in charge of computing a flow schedule for optimizing the transmission of packets between nodes (or elements) during each slot (or sub-part) of each frame (or periodic entity). For instance, in the existing TDMA wireless networks (such as GSM, WiMAX, 3G and LTE), which are based on a single-hop topology where each transmission occurs between a base station and at least one user communication equipment, each flow schedule is computed by means of a very simple algorithm, such as the ones called "round robin" and "proportionally fair". Therefore, each flow schedule appears to be sub-optimal.

In the case where the TDMA network is based on a multi-hop topology (i.e. comprises routers or access points (APs) connected (or linked) therebetween and serving user communication equipments), it becomes impossible to use a simple algorithm, such as the ones mentioned above (round robin and proportionally fair). Indeed, the schedule computation requires an exhaustive search over all transmission possibilities or a Maximum-Weight Independent set computation, which is a NP-complete problem in theory. So, to maximize the network throughput one must use an optimal algorithm, such as the one called "backpressure (scheduling) algorithm", in a "cross-layer network architecture" allowing cooperation among the multiple OSI layers of the protocol stack.

However, translating this type of algorithm into an operational network entails several challenges, mainly due to its idealized assumptions. Indeed, in essence an optimal algorithm assumes a globally synchronized time slotted MAC protocol at all nodes, as well as a central scheduler that, for each time slot of each frame, computes and disseminates, a schedule consisting in a set of non-interfering links that should transmit simultaneously. It is recalled that a network frame F(k) comprises a control part followed by a multi-slot part divided into N slots. The control part of a frame F(k) comprises a first sub-part during which information defining the network state Q(k) of elements is transmitted to the central scheduler, a second sub-part during which a schedule S(k) (comprising N sub-schedules associated respectively to the N slots of the current frame F(k)) is computed from the network state Q(k) by the central scheduler, and a third sub-part during which the computed schedule S(k) is transmitted to the elements in order its N sub-schedules be used respectively to transmit packets during the N slots of the multi-slot part of the current frame F(k).

Computation of each schedule not only requires global knowledge of per-flow queue backlogs and network state (i.e. link quality and link interference relations), which therefore should be measured in each node and then provided to a central scheduler in a timely manner, but also is time consuming, which therefore introduces a high overhead which occupies a significant fraction of the duration of each frame.

Some attempts for relaxing some of the above mentioned assumptions and for approximating the backpressure schedule algorithm in 802.11 networks (i.e. WLANs (Wireless Local Area Networks)) have been recently proposed. This is notably the case of the attempts described in the document of U. Akyol et al. "Joint scheduling and congestion control in mobile ad-hoc networks", in Proc. IEEE INFOCOM, Phoenix, AZ, USA, Apr. 2008, or in the document of B. Radunovic et al. "Horizon: Balancing TCP over Multiple Paths in Wireless Mesh Network", in Proc. ACM MobiCom, San Francisco, CA, USA, Sep. 2008, or else in the document of A. Warrier et al. "DiffQ: Practical Differential Backlog Congestion Control for Wireless Networks", in Proc. IEEE INFOCOM, Rio de Janeiro, Brazil, Apr. 2009. All these attempts seem to offer some performance benefits, but they are far from offering an optimal scheduling.

Summary of the invention

The objective of this invention is to offer a method and an associated device intended for computing a future schedule S(k+1) of elements with low overhead and as optimal as possible, from a current schedule S(k) of these elements, where each schedule S(k) is defined by N sub-schedules $S_n(k)$ (with $N \geq 2$ and n = 1 to N) intended to be successively used by the elements at N successive sub-parts of a periodic entity F(k) and inducing N successive updating of at least one network state of the elements. One means here by "network state" at least one component representative of the state of at least one element of a network and referring to queue size(s) q(k) and to relations between elements, such as link capacities c(k) (queue sizes are affected by a computed schedule but the link capacities may be not affected by this computed schedule).

More precisely, the method according to the invention consists in computing at least N-1 predictions $\hat{Q}_n$ ($k$ + 1) of the network state Q(k) for N-1 sub-parts of a next periodic entity F(k+1), and N future sub-schedules $S_n$(k+1), defining a future schedule S(k+1), for the N sub-parts of the next periodic entity F(k+1), from the network state Q(k) and these N-1 predictions $\hat{Q}_n$ ($k$ + 1), each prediction $\hat{Q}_n$ ($k$ + 1) being computed by emulating use by the elements of at least one sub-schedule $S_n$(k) and at least one future sub-schedule $S_n$(k+1).

The method according to the invention may include additional characteristics considered separately or combined, and notably:

- it may comprise the steps of

    i) computing a first prediction $\hat{Q}_1$ ($k$ + 1) of the network state Q(k) for the first sub-part of the next periodic entity F(k+1), by emulating the N successive uses by the elements of the N sub-schedules $S_n$(k) computed for the current periodic entity F(k), starting from the network state Q(k),
    ii) computing a future first sub-schedule $S_1$(k+1) for the first sub-part of the next periodic entity F(k+1) from this first prediction $\hat{Q}_1$($k$+1),
    iii) computing a second prediction $\hat{Q}_2$($k$+1) of the network state Q(k) for the second sub-part of the next periodic entity F(k+1), by emulating the use of the first sub-schedule $S_1$(k+1) by the elements, starting from the first prediction $\hat{Q}_1$($k$+1) , and
    iv) reproducing step ii) N-1 times and step iii) at least N-2 times with each time a new value of index n, incremented by one, till this index n reaches the value N, in order to obtain N future sub-schedules $S_n$(k+1) defining the future schedule S(k+1);

    ➢ one may estimate a network state Q(k) from statistics data relative to the elements and to relations between these elements, obtained for the beginning of the current periodic entity F(k), and one may compute each future schedule S(k+1) from this estimated network state Q(k) obtained for the beginning of the current periodic entity F(k);

    • one may estimate the network state Q(k) from statistics data relative to the elements and to relations between these elements, obtained for the beginning of the current periodic entity F(k), and from past information.

The device according to the invention is arranged for computing at least N-1 predictions $\hat{Q}_n$($k$+1) of the network state Q(k) for N-1 sub-parts of a next periodic entity F(k+1), and N future sub-schedules $S_n$(k+1), defining a future schedule S(k+1), for the N sub-parts of the next periodic entity F(k+1), from the network state Q(k) and these N-1 predictions $\hat{Q}_1$($k$+1), each prediction $\hat{Q}_1$($k$+1) being computed by emulating successive use by the elements of at least one sub-schedule $S_n$(k) and at least one future sub-schedule $S_n$(k+1).

The device according to the invention may include additional characteristics considered separately or combined, and notably:

- it may be arranged for carrying out the steps of i) computing a first prediction $\hat{Q}_1$($k$+1) of the network state Q(k) for the first sub-part of the next periodic entity F(k+1), by emulating the N successive uses by the elements of the N sub-schedules $S_n$(k) computed for the current periodic entity F(k), starting from the network state Q(k), ii) computing a future first sub-schedule $S_1$(k+1) for the first sub-part of the next periodic entity F(k+1) from this first prediction $\hat{Q}_1$($k$+1), iii) computing a second prediction $\hat{Q}_1$($k$+1) of the network state Q(k) for the second sub-part of the next periodic entity F(k+1), by emulating the use of the first sub-schedule $S_1$(k+1) by the elements, starting from the first prediction $\hat{Q}_1$($k$+1), and iv) reproducing step ii) N-1 times and step iii) at least N-2 times with each time a new value of index n, incremented by one, till this index n reaches the value N, in order to obtain N future sub-schedules $S_n$(k+1) defining the future schedule S(k+1);

    ➢ it may comprise a state estimator arranged for estimating a network state Q(k) from statistics data relative to the elements and to relations between these elements, obtained for the beginning of the current periodic entity F(k). In this case it is arranged for computing each future schedule S(k+1) from the estimated network state Q(k) obtained for the beginning of the current periodic entity F(k);

    • the state estimator may be arranged for estimating the network state from statistics data relative to the elements and to relations between these elements, obtained for the beginning of the current periodic entity F(k), and from past information.

The invention is well adapted, although not exclusively, to scheduling of packet transmissions, into N frame slots constituting respectively the N sub-parts of the periodic entity F(k), between nodes constituting elements of a network using a slotted access MAC protocol, the network state Q(k) being then representative of the respective lengths of queues of packet flows located into the nodes.

Brief description of the figures

Other features and advantages of the invention will become apparent on examining the detailed specifications hereafter and the appended drawings, wherein:

- figure 1 schematically and functionally illustrates an example of network comprising four communication equipments (or nodes) linked therebetween, and two gateways connected to two communication equipments (or nodes) and to a scheduler comprising an example of embodiment of a device according to the invention,
- figure 2 schematically and functionally illustrates a scheduler (or network equipment) comprising an example of embodiment of a device according to the invention, considered in the control plane, and
- figure 3 schematically illustrates two successive TDMA frames F(k) and F(k+1) produced with a method according to the invention.

Detailed description of the preferred embodiment

The appended drawings may serve not only to complete the invention, but also to contribute to its definition, if need be.

The invention aims at offering a method, and an associated device (D), intended for computing a future schedule of elements (Nj) with low overhead and as optimal as possible.

In the following description it will be considered that the elements (Nj) are nodes of a network (WN) using a slotted access MAC protocol. But the invention is not limited to this type of element. Indeed the invention concerns any type of element needing schedules to be capable of working with other elements of the same or equivalent type. For instance, the elements (Nj) could be also input ports and/or outputs ports of a (high-speed) switch that may be used in a wired backbone for switching packets.

For instance, the network (WN) is of the wireless type, such as an IEEE 802.11 network. But it could be of another type, as soon as it comprises nodes (or network equipments (Nj)) using a slotted access MAC protocol requiring optimal computations for each slot. So it may be also a wireline network using a slotted access MAC protocol like Ethernet. For instance, the network could be also of the optical type.

Moreover, in the following description it will be considered that the MAC protocol is a Time Division Multiple Access (TDMA) protocol. But it could be of another type. It is also assumed that the TDMA MAC protocol supports basic MAC functionalities such as an ARQ retransmission scheme or bit rate adaptation, for instance.

It is important to note that the network may be of the multi-hop type or of the single-hop type. Indeed, a single-hop type network is a particular case of a multi-hop type network.

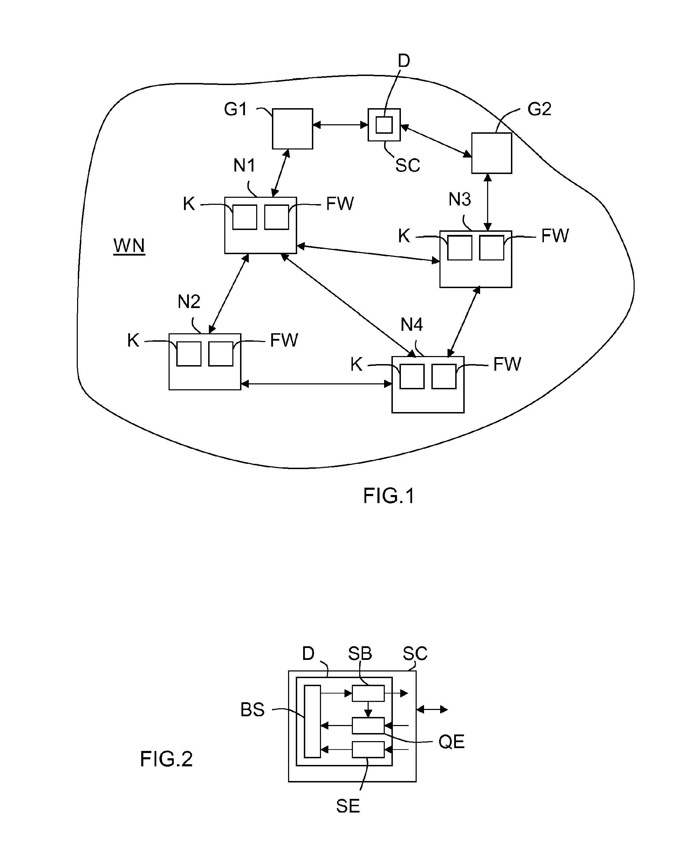

In the example illustrated in figure 1 the network WN comprises two gateways G1 and G2 that are connected to its wired infrastructure and may offer access to the Internet, and four nodes (or communication equipments) Nj (j = 1 to 4) that are linked therebetween and act as mobile access points (MAPs) to offer access to the network WN to user communication equipments (such as mobile phones, personal digital assistants (or PDAs), fixed computers or laptops). It is important to note that a gateway G1, G2 could be a node Nj.

Moreover, in the illustrated example the node index j varies from 1 to 4, but the number of nodes Nj may be greater or smaller than four (4), as soon as it is at least equal to two (2).

As illustrated in figures 1 and 2, each node Nj comprises, notably, a kernel K with a network layer and a firmware FW with a MAC layer implementing a MAC protocol. One means here by "layer" one of the seven layers of the OSI model of the protocol stack.

As mentioned before, the invention proposes a method intended for computing a future schedule S(k+1) of elements Nj from a current schedule S(k) of these elements Nj. In the chosen example elements Nj are network nodes, and each future schedule S(k+1) to be computed is intended to allow optimal packet transmissions between these nodes Nj into a future multi-slot frame (or periodic entity) F(k+1).

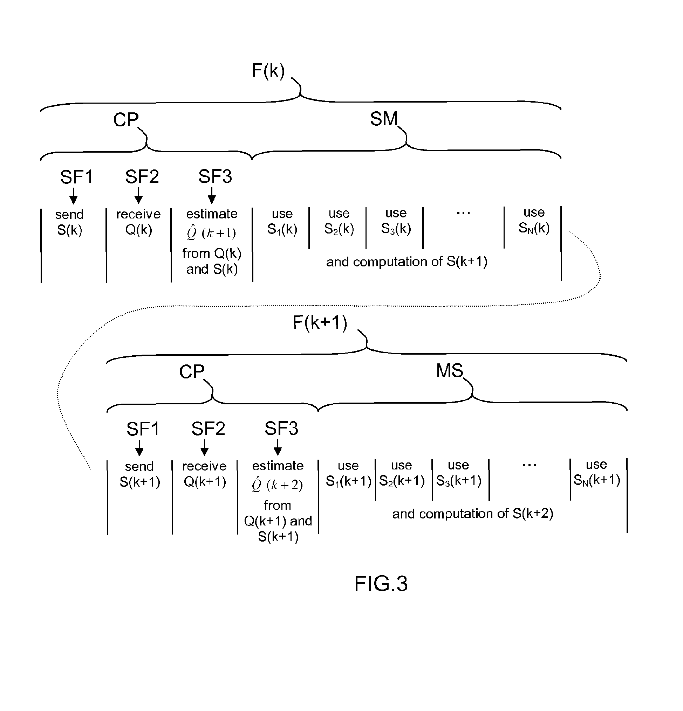

As illustrated in figure 3, a frame F(k) is associated to a schedule S(k) and comprises a control part CP followed by a multi-slot part MS divided into N slots referenced by an index n (with $N \geq 2$ and n = 1 to N) and to which are respectively associated N sub-parts $S_n(k)$ of the schedule S(k). Index k designates the current frame (or periodic entity) and therefore k+1 designates the next frame.

The control part CP of a frame F(k), according to the invention, may comprise a first sub-part SF1 during which the schedule S(k), computed during the preceding frame F(k-1), is transmitted to the nodes Nj, a second sub-part SF2 during which information defining the network state Q(k) of the nodes Nj is transmitted (here to a scheduler SC), and a third sub-part SF3 during which a new schedule S(k+1) is computed in order to be used during the next frame F(k+1). It is important to note that in the illustrated example information defining the network state Q(k) of the nodes Nj is transmitted to the scheduler SC after transmission of the computed schedule S(k) that must be used during frame F(k). But, in a variant the network state Q(k) of the nodes Nj could be transmitted to the scheduler SC before transmission of the computed schedule S(k).

The sub-parts (or sub-schedules) $S_n(k)$ are intended to be successively used by the nodes (or elements) Nj at N successive slots of a frame (or periodic entity) F(k) and therefore induce N successive updating of at least one network state Q(k) of these nodes Nj. Here, the network state Q(k) is representative of the respective lengths of queues of packet flows that are located into the nodes Nj and more precisely into their respective kernels K and firmwares FW. A sub-schedule $S_n(k)$ can be seen as a maximum-weight independent set of non-interfering links in the chosen example.

One means here by "queue" a storing means intended for storing temporarily packets of flows to be transmitted or received. So, it may be a memory or a buffer, either of the software type or hardware type (notably when one considers a switch instead of a network). A queue can be associated (and preferably dedicated) to a link established between two nodes Nj and Nj' (with j ≠ j') for allowing transmission of packets therebetween into multi-slot frames or to a packet flow.

Moreover, one means here by "network state" a state comprising at least one component. In the chosen example, given that each node Nj comprises several queues, each network state Q(k) comprises as many components as the collection of all the concerned queues in all the nodes Nj and the capacities c(k) of the links in the network (WN). So, each network state Q(k) refers to queue sizes q(k) and to link capacities c(k).

The method according to the invention can be implemented by a device D according to the invention.

As it is schematically illustrated in figures 1 and 2, a device D, according to the invention, may be located into a network equipment SC which belongs to, or is connected to, the network WN. For instance, this network equipment SC is a (network) scheduler. But this device D could be an equipment coupled to a network equipment of the network WN, such as a management or control equipment.

So, a device D can be made of software modules, at least partly, or of electronic circuit(s) or hardware modules, or else of a combination of hardware and software modules (in this case the device D comprises also software interfaces allowing interworking between the hardware and software modules).

The method according to the invention consists in computing at least N-1 predictions $\hat{Q}_n(k+1)$ of the network state Q(k), respectively for N-1 sub-parts (or slots) of a next periodic entity (or frame) F(k+1), and N future sub-schedules $S_n(k+1)$, defining a future schedule S(k+1), for the N sub-parts (or slots) of the next periodic entity (or frame) F(k+1), from the network state Q(k) and these N-1 predictions $\hat{Q}_n(k+1)$ . Computing of the at least N-1 predictions $\hat{Q}_n(k+1)$ is obtained by emulating use by the nodes Nj of at least one sub-schedule $S_n(k)$ and at least one future sub-schedule $S_n(k+1)$.

Preferably, a flow schedule comprises a sequence of schedule entries, where each entry contains a n-uplet (f,s,F,L) associated to one of the nodes Nj. Each n-uplet (f,s,F,L) may comprise (here) a frame number f designating a concerned frame, a slot number s designating the concerned slot in the concerned frame, during which the concerned node Nj is authorized to transmit, a flow queue identifier F designating a flow queue of the concerned node Nj that stores a packet that must be transmitted during the concerned slot, and a link identifier L designating a link of the concerned node Nj from which the concerned packet should be transmitted.

The network state Q(k), that is used at the beginning of the computation (i.e. for the first frame slot (n = 1 )), is the one that is available at this instant in the network WN (in the chosen example). Preferably, Q(k) is constituted from (queue length) information that is provided by the nodes Nj to the scheduler SC, over an uplink control channel of the network WN, during the control part CP of each frame F(k) and therefore after the end of the preceding frame F(k-1).

Still more preferably, the nodes Nj provides also to the scheduler SC statistics data representative of the network state (i.e. link quality (for instance link losses) and interference pattern) in addition to the queue information, because the network state is useful for computing an optimal future flow schedule S(k+1). In this case, each time the scheduler SC receives information data representative of the network state its device D updates its local topology and interference databases. For instance, and as illustrated in figure 2, the device D may comprise a state estimator SE in charge of estimating the current network state from the received statistics data. Past information data as well as the most recent information data can be used for a more accurate estimate of the network state.

For instance, the method may comprise four steps.

A first step (i) may consists in computing a first prediction $\hat{Q}_1(k+1)$ of the network state Q(k) for the first sub-part $F_1(k+1)$ of the next periodic entity F(k+1) (i.e. the first frame slot (n = 1)). This can be done by emulating locally the N successive uses by the nodes Nj of the N sub-schedules $S_n(k)$ that have been previously computed for the current periodic entity F(k), starting from the network state Q(k). In other words, one (the device D) emulates the use by the nodes Nj of the first sub-schedule $S_1(k)$ for the first slot, which induces a first updating of the network state Q(k), then one (the device D) emulates the use by the nodes Nj of the second sub-schedule $S_2(k)$ for the second slot, which induces a second updating of the network state Q(k), and so on till the emulation of the use by the nodes Nj of the N-th sub-schedule $S_N$(k) for the N-th slot, which induces a N-th updating of the network state Q(k) which constitutes the first prediction $\hat{Q}_1$(k+1) for the first frame slot $F_1$(k+1) of the next periodic entity F(k+1).

One means here by "emulation" the simulation of packet transmission by the nodes Nj according to the considered sub-schedule $S_n$(k).

Since schedule $\hat{S}$(k) is representative (here) of the flows, links and rates used at each slot of a frame F(k), the first prediction $\hat{Q}_1$(k+1) can easily be obtained by applying the transmission step of a chosen scheduling algorithm at every frame slot and by locally updating the scheduled flow queues by decrementing the transmission queues and incrementing the reception queues.

For instance, the chosen scheduling algorithm can be the backpressure scheduling algorithm.

It is recalled that the backpressure algorithm assumes a time slot-synchronized wireless network shared by unicast multi-hop flows, where each node Nj maintains a separate queue for each flow. At each slot, a set of links can be activated for transmission. The capacity $\mu_{ij}$ of each wireless link (i,j) in the link transmission set is the maximum rate in bit/s that the wireless link (i,j) can transmit subject to the channel state and the interference due to the other wireless links in the set. Each link transmission set defines a link capacity vector $\mu = (\mu_{ij})$ containing the capacities of the links in the set. The link capacity vectors define the network capacity region $\Lambda$ as a convex hull. If the flows are sent at rates within the capacity region, then a scheduling algorithm is throughput-optimal if it can realize these rates by not allowing any queue to blow to infinity. It can be proven that the backpressure algorithm is throughput-optimal.

The backpressure algorithm comprises several steps that are executed at each time slot and detailed hereafter. At each time slot, the algorithm first assigns a weight to each link that equals the maximum differential queue backlog between its transmitting and receiving nodes and at a next step it activates a transmission set of links that maximize the sum of the product of link weights and link capacities. More specifically, the backpressure algorithm consists of the following steps executed at each time slot.

A first step consists in flow scheduling and routing. For each link (i,j), one selects the flow $f^*_{ij}$ with the maximum queue differential backlog:

$$f^*_{ij} = \arg\max_{f \in F} (q_i^f - q_j^f) ,$$

where $q_i^f$ and $q_j^f$ are the queue backlogs for flow f at nodes Ni and Nj, respectively. The equation of $f^*_{ij}$ implicitly performs routing by selecting the link (i,j) that each flow will use during the slot. The weight of each link is selected as the weight of flow $f^*_{ij}$: $w_{ij} = \max q_i^f$).

A second step consists in a link scheduling. This step selects the link capacity vector $\mu^* = (\mu_{ij})$ that satisfies:

$$\mu^* = \arg\max_{\mu \in \Lambda} \sum_{(i,j)} \mu_{ij} w_{ij} ,$$

where $\mu = (\mu_{ij})$ are the link capacity vectors defining the network capacity region $\Lambda$.

A third step consists in packet transmission through the wireless medium. During the considered slot, each node Ni serves the queue of flow $f^*_{ij}$ on link (i, j) using rate $\mu^*_{ij}$.

The backpressure algorithm is throughput-optimal when the flow rates are within the capacity region, which is difficult to characterize in practice. This issue can be addressed by combining the backpressure algorithm with the Network Utility Maximization (NUM) framework, originally proposed for wireline networks. This framework leads to a simple distributed congestion control algorithm where the source node s of each flow f adjusts the flow rate $X_f$ as follows:

$$x^*_f = \arg\max_{x_f \geq 0} U_f(x_f) - x_f q_s^f = U_f^{'-1}(q_s^f) ,$$

where $q_s^f$ is the congestion price, which is proportional to the number of packets in the queue of flow f at the source node Ns.

It can be proven that the congestion control mechanism of the last equation of $x^*_f$ regulates the flow rates so that they are within the network capacity region and also cooperates with the backpressure scheduler SC to provide various notions of fairness by solving the NUM problem for the case of wireless networks.

Moreover, the backpressure algorithm makes several assumptions mentioned hereafter.

It assumes a slotted time scale. At each slot, non-interfering links are selected for transmission in order to maximize throughput. Global synchronization and a TDMA MAC protocol are therefore required to define slot boundaries and control the access to the wireless medium.

Only non-interfering links can be scheduled in the same time slot. As a result, the interference pattern as well as the independent link sets must be known in advance. A low complexity interference estimation technique must then be in place to determine which links are allowed to transmit together.

Scheduling decisions are assumed to be made in a centralized fashion, since global knowledge of network state and queue backlogs are required. Also, the complexity of the computation can be very high and depends on the interference model. For general interference models, the optimal solution of the link scheduling problem in the equation of $\mu^*$ requires exhaustive search over all link capacity vectors, whose number grows exponentially with the number of links.

For a scheduling decision to be made, the scheduler SC must have knowledge of the network state (i.e. link quality and interference pattern) as well as the queue backlogs. In theory, this information must be known at every slot to calculate the throughput optimal schedule. Once the schedule is computed, it must be sent back to the nodes Nj for proper execution.

Memory resources on most wireless platforms are constrained to only a handful of packets, which prevents a complete backpressure hardware solution. A few functionalities (e.g. queuing management) must then be implemented at upper layers in the kernels (K), while others (e.g. the MAC protocol) must be directly realized in the wireless card firmware (FW).

It schedules links rather than nodes, for transmission at each slot. This means that if a link (i,j) is scheduled, node Ni must transmit only to node Nj.

As illustrated in figure 2, this first step (i) can be implemented into a queue estimator QE and a (backpressure) scheduler BS of the device D. The queue estimator QE is fed with the information representative of the network state Q(k) and originating from the nodes Nj, and with the sub-schedules $S_n(k)$ computed for each frame slot by the (backpressure) scheduler BS. The (backpressure) scheduler BS is fed with the updated queue information provided by the queue estimator QE, and with the possible network state provided by the possible state estimator SE.

A second step (ii) of the method according to the invention may consists in computing a future first sub-schedule $S_1(k+1)$ for the first sub-part of the next periodic entity F(k+1) (i.e. the first frame slot (n = 1)), from the first prediction $\hat{Q}_1(k+1)$. This can be done by means of a maximum weight independent set (MWIS) algorithm on a weighted conflict graph, for instance.

This second step (ii) can be implemented into the (backpressure) scheduler BS.

As illustrated in figure 2, each computed future sub-schedule $S_n(k+1)$ may be stored into a storing means SB of the device D that is coupled to the queue estimator QE and the (backpressure) scheduler BS.

A third step (iii) of the method according to the invention may consists in computing a second prediction $\hat{Q}_2(k+1)$ of the network state Q(k) for the second sub-part $F_2(k+1)$ of the next periodic entity F(k+1) (i.e. the second frame slot (n = 2)). This can be done by emulating locally the use by the nodes Nj of the first future sub-schedule $S_1(k)$ that have been computed in the second step (ii), starting from the first prediction $\hat{Q}_1(k+1)$.

The second prediction $\hat{Q}_2(k+1)$ constituting an updating of the first prediction $\hat{Q}_1(k+1)$, it replaces the latter into the queue estimator QE.

A fourth step (iv) of the method according to the invention may consists in reproducing the second step (ii) N-1 times and the third step (iii) at least N-2 times with each time a new value of index n, incremented by one, till this index n reaches the value N. This allows to obtain N future sub-schedules $S_n(k+1)$ defining the future schedule S(k+1).

It is important to note that it is sufficient to reproduce only N-2 times the third step (iii) given that after N-1 third step (iii) one has the (N-1)-th prediction $\hat{Q}_{N-1}(k+1)$ that is useful for the computation of the N-th future sub-schedule $S_N(k+1)$ in the N-th second step (ii), and that the N-th prediction $\hat{Q}_N(k+1)$ is not used for the computation of the next future schedule (F(k+2)), given that one will preferably use the next updated network state Q(k+1) provided by the nodes Nj at the end of frame F(k+1).

Once the device D as computed a complete future flow schedule S(k+1) for the next frame F(k+1), its scheduler SC disseminates it to the nodes Nj over a downlink control channel of the network WN. Then the MAC protocol of each node Nj applies this new flow schedule for transmissions in each slot of the next frame F(k+1). This working cycle repeats periodically.

The invention is not limited to the embodiments of method and device described above, only as examples, but it encompasses all alternative embodiments which may be considered by one skilled in the art within the scope of the claims hereafter.

**Claims**

1. Method for computing a future schedule (S(k+1)) of elements (Nj) from a current schedule (S(k)) of said elements (Nj), each schedule (S(k)) being defined by N sub-schedules ($S_n$(k)) (with N ≥ 2 and n = 1 to N) intended to be successively used by said elements (Nj) at N successive sub-parts of a periodic entity (F(k)) and inducing N successive updating of at least one network state (Q(k)) of said elements (Nj), **characterized in that** it consists in computing at least N-1 predictions ($\hat{Q}_n$(k+1)) of said network state (Q(k)) for N-1 sub-parts of a next periodic entity (F(k+1)), and N future sub-schedules ($S_n$(k+1)), defining said future schedule (S(k+1)), for said N sub-parts of the next periodic entity (F(k+1)), from said network state (Q(k)) and said N-1 predictions $\hat{Q}_n$(k+1)), each prediction $\hat{Q}_n$(k+1)) being computed by emulating use by said elements (Nj) of at least one sub-schedule ($S_n$(k)) and at least one future sub-schedule ($S_n$(k+1)).

2. Method according to claim 1, **characterized in that** it comprises the steps of

   i) computing a first prediction ($\hat{Q}_1$(k+1)) of said network state (Q(k)) for the first sub-part of the next periodic entity (F(k+1)), by emulating the N successive uses by said elements (Nj) of said N sub-schedules ($S_n$(k)) computed for the current periodic entity (F(k)), starting from said network state (Q(k)),
   ii) computing a future first sub-schedule ($S_1$(k+1)) for said first sub-part of the next periodic entity (F(k+1)) from said first prediction $\hat{Q}_1$(k+1) +1)),
   iii) computing a second prediction ($\hat{Q}_2$(k+1)) of said network state (Q(k)) for the second sub-part of said next periodic entity (F(k+1)), by emulating the use of said first sub-schedule ($S_1$(k+1)) by said elements (Nj), starting from said first prediction ($\hat{Q}_1$(k+1)), and
   iv) reproducing step ii) (N-1) times and step iii) at least (N-2) times with each time a new value of index n, incremented by one, till said index n reaches the value N, in order to obtain N future sub-schedules ($S_n$(k+1)) defining said future schedule (S(k+1)).

3. Method according to claim 2, **characterized in that** one estimates a network state (Q(k)) from statistics data relative to said elements (Nj) and to relations between said elements (Nj), obtained for the beginning of said current periodic entity (F(k)), and one computes each future schedule (S(k+1)) from said estimated network state (Q(k)) obtained for the beginning of said current periodic entity (F(k)).

4. Method according to claim 3, **characterized in that** one estimates said network state (Q(k)) from statistics data relative to said elements (Nj) and to relations between said elements (Nj), obtained for the beginning of said periodic entity (F(k)), and from past information.

5. Device (D) for computing a future schedule (S(k+1)) of elements (Nj) from a current schedule (S(k)) of said elements (Nj), each schedule (S(k)) being defined by N sub-schedules ($S_n$(k)) (with N ≥ 2 and n = 1 to N) intended to be successively used by said elements (Nj) at N successive sub-parts of a periodic entity (F(k)) and inducing N successive updating of at least one network state (Q(k)) of said elements (Nj), **characterized in that** it is arranged for computing at least N-1 predictions ($\hat{Q}_n$(k+1)) of said network state (Q(k)) for N-1 sub-parts of a next periodic entity (F(k+1)), and N future sub-schedules ($S_n$(k+1)), defining said future schedule (S(k+1)), for said N sub-parts of the next periodic entity (F(k+1)), from said network state (Q(k)) and said N-1 predictions ($\hat{Q}_n$(k+1)), each prediction ($\hat{Q}_n$(k+1)) being computed by emulating use by said elements (Nj) of at least one sub-schedule ($S_n$(k)) and at least one future sub-schedule ($S_n$(k+1)).

6. Device according to claim 5, **characterized in that** it is arranged for carrying out the steps of i) computing a first prediction ($\hat{Q}_1$(k+1)) of said network state (Q(k)) for the first sub-part of the next periodic entity (F(k+1)), by emulating the N successive uses by said elements (Nj) of said N sub-schedules ($S_n$(k)) computed for the current periodic entity (F(k)), starting from said network state (Q(k)), ii) computing a future first sub-schedule ($S_1$(k+1)) for said first sub-part of the next periodic entity (F(k+1)) from said first prediction $\hat{Q}_1$(k+1)), iii) computing a second prediction ($\hat{Q}_2$(k+1)) of said network state (Q(k)) for the second sub-part of said next periodic entity (F(k+1)), by emulating the use of said first sub-schedule ($S_1$(k+1)) by said elements (Nj), starting from said first prediction ($\hat{Q}_1$(k+1)), and iv) reproducing step ii) (N-1) times and step iii) at least (N-2) times with each time a new value of index n, incremented by one, till said index n reaches the value N, in order to obtain N future sub-schedules ($S_n$(k+1)) defining said future schedule (S(k+1)).

7. Device according to claim 6, **characterized in that** it comprises a state estimator (SE) arranged for estimating a network state (Q(k) from statistics data relative to said elements (Nj) and to relations between said elements (Nj), obtained for the beginning of said current periodic entity (F(k)), and **in that** it is arranged for computing each future schedule (S(k+1)) from said estimated network state (Q(k)) obtained for the beginning of said current periodic entity (F(k)).

8. Device according to claim 7, **characterized in that** state estimator (SE) is arranged for estimating said network state (Q(k)) from statistics data relative to said elements (Nj) and to relations between said elements (Nj), obtained for the beginning of said current periodic entity (F(k)), and from past information.

9. Use of the method according to one of claims 1 to 4 and of the device (D) according to one of claims 5 to 8 for scheduling packet transmissions, into N frame slots constituting respectively said N sub-parts of said periodic entity (F(k)), between nodes constituting said elements (Nj) and belonging to a network (WN) using a slotted access MAC protocol, said network state (Q(k)) being representative of respective lengths of queues of packet flows located into said nodes (Nj).

FIG.1

FIG.2

F(k)

CP                                          SM

SF1         SF2         SF3

send        receive     estimate    use      use      use      ···      use
S(k)        Q(k)        $\hat{Q}\,(k+1)$  $S_1(k)$  $S_2(k)$  $S_3(k)$            $S_N(k)$

                        from Q(k)
                        and S(k)           and computation of S(k+1)

F(k+1)

CP                                          MS

SF1         SF2         SF3

send        receive     estimate    use        use        use       ···      use
S(k+1)      Q(k+1)      $\hat{Q}\,(k+2)$  $S_1(k+1)$  $S_2(k+1)$  $S_3(k+1)$          $S_N(k+1)$

                        from
                        Q(k+1) and         and computation of S(k+2)
                        S(k+1)

FIG.3

Europäisches
Patentamt

European
Patent Office

Office européen
des brevets

**EUROPEAN SEARCH REPORT**

Application Number

EP 10 30 6002

| | **DOCUMENTS CONSIDERED TO BE RELEVANT** | | |
|---|---|---|---|
| Category | Citation of document with indication, where appropriate, of relevant passages | Relevant to claim | CLASSIFICATION OF THE APPLICATION (IPC) |
| X | US 2003/018803 A1 (EL BATT TAMER [US] ET AL) 23 January 2003 (2003-01-23) * paragraphs [0023], [0028] - [0034], [0124] - [0137] * ----- | 1-9 | INV. H04L12/56 H04W72/12 |
| X | EP 1 489 787 A1 (MATSUSHITA ELECTRIC IND CO LTD [JP]) 22 December 2004 (2004-12-22) * claims * ----- | 1-9 | |
| X | EP 2 073 463 A1 (NOKIA SIEMENS NETWORKS SPA [IT]; NOKIA SIEMENS NETWORKS OY [FI]) 24 June 2009 (2009-06-24) * paragraphs [0014], [0053] * * claims * ----- | 1-9 | |
| | | | TECHNICAL FIELDS SEARCHED (IPC) |
| | | | H04W |

The present search report has been drawn up for all claims

| Place of search | Date of completion of the search | Examiner |
|---|---|---|
| The Hague | 15 February 2011 | Pérez Pérez, José |

EPO FORM 1503 03.82 (P04C01)

## ANNEX TO THE EUROPEAN SEARCH REPORT
## ON EUROPEAN PATENT APPLICATION NO.

EP 10 30 6002

This annex lists the patent family members relating to the patent documents cited in  the above-mentioned European search report.
The members are as contained in the European Patent Office EDP file on
The European Patent Office is in no way liable for these particulars which are merely given for the purpose of information.

15-02-2011

| Patent document cited in search report | | Publication date | Patent family member(s) | | Publication date |
|---|---|---|---|---|---|
| US 2003018803 | A1 | 23-01-2003 | NONE | | |
| EP 1489787 | A1 | 22-12-2004 | AU | 2003220934 A1 | 13-10-2003 |
| | | | CN | 1643855 A | 20-07-2005 |
| | | | WO | 03084155 A1 | 09-10-2003 |
| | | | JP | 3530177 B2 | 24-05-2004 |
| | | | JP | 2003289575 A | 10-10-2003 |
| | | | US | 2005159185 A1 | 21-07-2005 |
| EP 2073463 | A1 | 24-06-2009 | NONE | | |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **U. AKYOL et al.** Joint scheduling and congestion control in mobile ad-hoc networks. *Proc. IEEE INFOCOM,* April 2008
- Horizon: Balancing TCP over Multiple Paths in Wireless Mesh Network. **RADUNOVIC et al.** Proc. ACM MobiCom. September 2008

- **A. WARRIER et al.** DiffQ: Practical Differential Backlog Congestion Control for Wireless Networks. *Proc. IEEE INFOCOM,* April 2009